# EUROPEAN PATENT APPLICATION

(11) **EP 4 491 493 A1**
(43) Date of publication of application: **15.01.2025**
(21) Application number: 23766627.6
(22) Date of filing: 27.02.2023
(51) Int. Cl.: B62D 25/10

(54) **INNER PANEL OF AUTOMOBILE HOOD, AUTOMOBILE HOOD, AND METHOD FOR MANUFACTURING AUTOMOBILE HOOD**

(30) Priority: 09.03.2022 JP 2022035867
(71) Applicant: NIPPON STEEL CORPORATION, Chiyoda-ku Tokyo 100-8071 (JP)
(72) Inventor: NORITA, Katsunari, Tokyo 100-8071 (JP); SAWA, Yasunori, Tokyo 100-8071 (JP); NISHIMURA, Ryuichi, Tokyo 100-8071 (JP)
(74) Representative: Zimmermann & Partner Patentanwälte mbB
(86) International application number: PCT/JP2023/007105
(87) International publication number: WO 2023/171449

(57) **Abstract**

In an automobile hood, further enhancement of pedestrian protection properties when a pedestrian collides with a rear part of the automobile hood is enabled. An inner panel 2 of an automobile hood 1 includes: a pedestal 7 arranged on an inner side of the inner panel 2 relative to an outer circumferential portion 5 of the inner panel 2; a plurality of units 9 each including an inclined wall 12 rising from the pedestal 7, and a flange 11 continuous with an upper end of the inclined wall 12; and beads 21 and 22 including at least one of a structure for connecting together outer end portions 55 of the inner panel 2 in a height direction Z perpendicular to a sheet thickness direction of the inner panel 2 and a structure for connecting an outer circumferential portion 73 of the pedestal 7 and the outer end portion 55. A plurality of the beads 21 and 22 are provided, and are arranged on a rear portion 1a side of the inner panel 2 in a vehicle length direction (longitudinal direction Y) of a vehicle in which the automobile hood 1 is installed.

## Description

### TECHNICAL FIELD

The present invention relates to an inner panel of an automobile hood, an automobile hood, and a method for producing an automobile hood.

### BACKGROUND ART

It is necessary for an automobile, which is one kind of vehicle, to secure pedestrian protection performance assuming the occurrence of a collision with a pedestrian. When an automobile collides with a pedestrian, in some cases a hood which is located at the front part of the automobile collides with the head of the pedestrian. It is desirable for an automobile hood to have a structure that can reduce injuries to the head of a pedestrian that is caused by such a collision. An automobile hood has an inner panel and an outer panel. Technologies relating to inner panels for reducing injuries during a collision with a pedestrian have been proposed (for example, see Patent Documents 1 and 2).

Patent Document 1 discloses a vehicle hood having an inner panel that is directed at solving the problem of improving performance with respect to protecting the head of a pedestrian in the event of a front surface collision between an automobile and a pedestrian. This inner panel is made of an aluminum alloy. The inner panel has a plurality of hat-shaped main beads that are arranged in a center portion except for an edge thereof. The main beads are projected in the upward or downward direction of the vehicle and are arranged in parallel.

Patent Document 2 discloses a vehicle hood that is directed at solving the problem of achieving both an improvement in energy absorption performance when an impacting body collides with the hood and an improvement in deformation performance of the hood during a frontal collision (during a front surface collision). This vehicle hood has beads (30) formed so as to extend along the front-rear direction of the hood in a framework formation section that is arranged in a central region. At both edge portions in the cross direction of the hood, beads (22) are arranged near the center in the front-rear direction of the vehicle.

### LIST OF PRIOR ART DOCUMENTS

### PATENT DOCUMENT

Patent Document 1: JP2015-199442A
Patent Document 2: WO 2011/080835

### SUMMARY OF INVENTION

### TECHNICAL PROBLEM

The reason an injury is caused to the head of a pedestrian when a pedestrian collides with an automobile is because the head of the pedestrian collides with one or more components inside the engine compartment through the automobile hood due to the automobile hood deforming when the collision occurs. In order to reduce head injuries, in an automobile hood, it is required to not only increase the strength of the automobile hood by using a thick starting material or a high strength starting material, but to also adopt a structure that effectively absorbs and releases the impact when a collision occurs.

There is a relatively wide space at the central portion of an automobile hood between the components installed in the engine compartment and the outer panel of the automobile hood. Therefore, at the central portion of an automobile hood, it is easy to adopt a structure for reducing an injury to a pedestrian in the event of a collision. On the other hand, the outer circumferential portion of an automobile hood is connected to panels around the automobile hood and to the vehicle body by hinges or the like, and consequently there is very little surplus space at the outer circumferential portion. Therefore, the pedestrian protection properties of an automobile hood tend to be good at the central portion and poor at the outer circumferential portion. In particular, the pedestrian protection properties tend to be low when the head of a pedestrian collides with the rear part of the automobile hood.

However, with respect to the configurations described in Patent Documents 1 and 2, it cannot be said that special consideration has been given to the pedestrian protection properties in the event of the head of a pedestrian colliding with the rear part of the automobile hood.

The present invention has been made in view of the problem described above, and an objective of the present invention is, in an automobile hood, to enable a further increase in the pedestrian protection properties at a time when a pedestrian collides with a rear part of the automobile hood.

### SOLUTION TO PROBLEM

The gist of the present invention is an inner panel of an automobile hood, an automobile hood, and a method for producing an automobile hood that are described hereunder.
(1) An inner panel of an automobile hood, including:
   a pedestal that is arranged on an inner side of the inner panel relative to an outer circumferential portion of the inner panel,
   a plurality of units that each include an inclined wall rising from the pedestal, and a flange that is continuous with an upper end of the inclined wall, and
   at least one bead among a bead that connects together outer end portions of the inner panel in a direction perpendicular to a sheet thickness direction of the inner panel, and a bead that connects an outer circumferential portion of the pedestal and the outer end portion,
   wherein:
      a plurality of the beads are provided, and are arranged on a rear side of the inner panel in a vehicle length direction of a vehicle in which the automobile hood is installed.
(2) The inner panel of an automobile hood according to the above (1), wherein:
   each of the beads has a height of 10 mm to 40 mm and a width of 10 mm to 40 mm.
(3) The inner panel of an automobile hood according to the above (1) or the above (2), wherein:
   the flange of each of the units is a polygonal shape or a circular shape as viewed in the sheet thickness direction of the inner panel.
(4) The inner panel of an automobile hood according to the above (3), wherein:
   a plurality of the units are disposed in a close-packed arrangement.
(5) The inner panel of an automobile hood according to any one of the above (1) to the above (4), wherein:
   when the automobile hood is installed in the vehicle, a plurality of the beads are arranged so that a suspension tower of the vehicle is arranged between a plurality the beads as viewed in the sheet thickness direction of the inner panel.
(6) The inner panel of an automobile hood according to any one of the above (1) to the above (5), wherein:
   the inner panel is composed of a steel sheet having a sheet thickness of 0.3 mm to 0.6 mm.
(7) An automobile hood, including:
   the inner panel according to any one of the above (1) to the above (6), and
   an outer panel that is arranged on an upper side of the inner panel and is joined to the flange.
(8) A method for producing the automobile hood according to the above (7), including:
   producing the automobile hood as a test hood, and under a condition in which a predetermined vehicle component is arranged at a predetermined distance below the test hood, determining a value of impact acting on an object when an impact load is applied from the object onto a rear part of the test hood, and
   forming the bead at a position that is set based on a relation between a distance of the bead from the vehicle component as viewed in the sheet thickness direction of the inner panel and the value of impact.

### ADVANTAGEOUS EFFECTS OF INVENTION

According to the present invention, in an automobile hood, pedestrian protection properties when a pedestrian collides with a rear part of the automobile hood can be further enhanced.

### BRIEF DESCRIPTION OF DRAWINGS

[Figure 1] Figure 1 is a schematic exploded perspective view of an automobile hood according to one embodiment of the present invention.
[Figure 2] Figure 2 is a plan view of an inner panel of the automobile hood.
[Figure 3] Figure 3 is a schematic cross-sectional view along a line III-III in Figure 2.
[Figure 4] Figure 4 is a cross-sectional view along a line IV-IV in Figure 2.
[Figure 5] Figure 5 is a view in which one part of Figure 3 is enlarged.
[Figure 6] Figure 6(A) is a perspective view in which a periphery of one unit of the inner panel is enlarged. Figure 6(B) is a view for describing the respective unit boundaries of a plurality of units.
[Figure 7] Figure 7 is a plan view illustrating an overhanging structure extracted from the inner panel.
[Figure 8] Figure 8 is a view in which a right rear part of the inner panel is enlarged.
[Figure 9] Figure 9 is a right-side view of the inner panel, in which illustration of one part of an upper portion of the overhanging structure is omitted.
[Figure 10] Figure 10 is a view in which an area around the right rear part of the inner panel illustrated in Figure 9 is enlarged.
[Figure 11] Figure 11 is a perspective view of an area around a rear part on a right side of the inner panel.
[Figure 12] Figure 12(A) is a multiview drawing schematically illustrating each of, in a first bead, a cross section perpendicular to a longitudinal direction of the first bead, and in a second bead, a cross section perpendicular to a longitudinal direction of the second bead, in which illustration of a rear side of each cross section is omitted. Figure 12(B) is a view illustrating a modification of a cross-sectional shape of the beads.
[Figure 13] Figure 13 is a graph illustrating one example of a relation between the distance from a center of a suspension tower to the first bead, and a HIC (value of impact).
[Figure 14] Figure 14(A) is a schematic plan view of a principal part of the inner panel that illustrates a first modification of an arrangement of beads. Figure 14(B) is a schematic plan view of a principal part of the inner panel that illustrates a second modification of the arrangement of beads. Figure 14(C) is a schematic plan view of a principal part of the inner panel that illustrates a third modification of the arrangement of beads. Figure 14(D) is a schematic plan view of a principal part of the inner panel that illustrates a fourth modification of the arrangement of beads.
[Figure 15] Figure 15(A) is a schematic plan view of a principal part of the inner panel that illustrates a fifth modification of the arrangement of beads. Figure 15(B) is a schematic plan view of a principal part of the inner panel that illustrates a sixth modification of the arrangement of beads. Figure 15(C) is a schematic plan view of a principal part of the inner panel that illustrates a seventh modification of the arrangement of beads.
[Figure 16] Figure 16 is a multiview drawing illustrating a modification of a unit, in which Figure 16(A) is a schematic plan view of a principal part, and Figure 16(B) is a cross-sectional view of one unit illustrated in Figure 16(A).

### DESCRIPTION OF EMBODIMENT

Hereunder, first, the circumstances leading to the conception of the present invention will be described, and then an embodiment will be described in detail.

### [Circumstances leading to conception of present invention]

The characteristics required of an automobile include pedestrian protection properties in the event of the automobile colliding with a pedestrian. In addition, in recent years, accompanying the electric motorization of vehicles, there is a demand to suppress an increase in vehicle weight (reduce vehicle body weight).

In order to simultaneously satisfy the requirements of reducing vehicle body weight and providing high pedestrian protection performance, the inventors of the present application conducted studies regarding the structure of an automobile hood that can achieve both a weight reduction and panel rigidity by using a thin steel material that has high strength. In other words, the inventors of the present application conducted studies regarding the structure of an automobile hood that can satisfy the conflicting requirements of reducing vehicle body weight and providing high pedestrian protection performance.

An automobile hood is installed over the engine compartment. An automobile hood includes an outer panel, and an inner panel that is arranged on the inner side of the outer panel. The outer panel has a shape which is convex toward the outer side (upper side) of the vehicle, and which has an overall curvature. At the central portion of an automobile hood, there is a relatively wide space between the outer panel and the components installed in the engine compartment. On the other hand, an outer circumferential portion of an automobile hood is connected to panels around the automobile hood and to the vehicle body by hinges or the like, and consequently there is very little surplus space at the outer circumferential portion. Therefore, the pedestrian protection properties of an automobile hood tend to be good at the central portion of the automobile hood and poor at the outer circumferential portion of the automobile hood.

The inventors of the present application conceived of an idea of providing a polygonal overhang portion at the central portion of the inner panel which is a region of the inner panel where there is a relatively large amount of space between the inner panel and components in the engine compartment. By this means, the panel rigidity of the automobile hood is secured even when the automobile hood is made of a thin-walled material. Furthermore, a reduction in the weight of the inner panel is achieved by forming through-holes in the top of the overhang portion and making the overhang portion a polygonal annular shape. In addition, the inventors of the present application conceived of strengthening the panel rigidity by, in the outer circumferential portion of the inner panel where the rigidity is lower than at the central portion of the inner panel, installing a linear bead on the rear side (windshield side) which is a side where there is a wide area in the outer circumferential portion. As described above, the inventors of the present application have eliminated low rigidity portions (portions where pedestrian protection performance is low) in the overall inner panel of an automobile hood.

### [Description of embodiment]

Hereunder, an embodiment of the present invention is described while referring to the accompanying drawings.

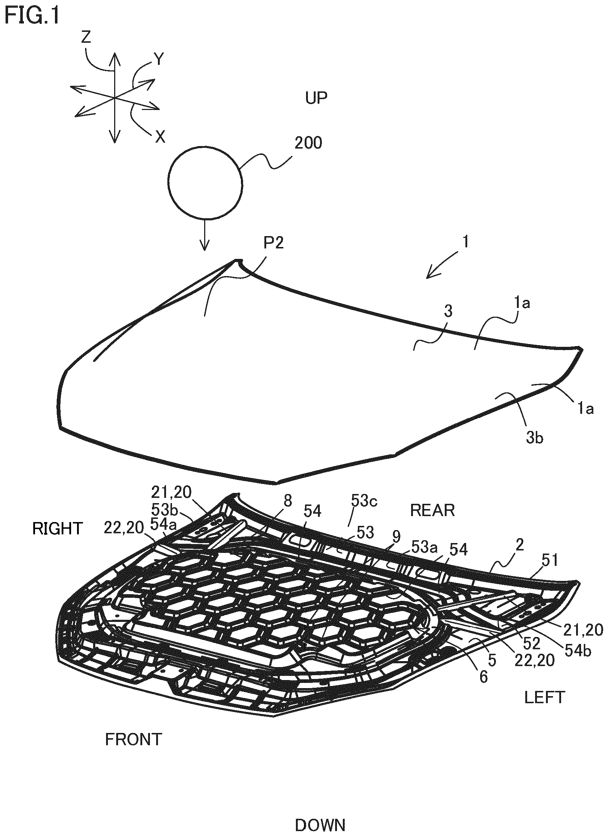

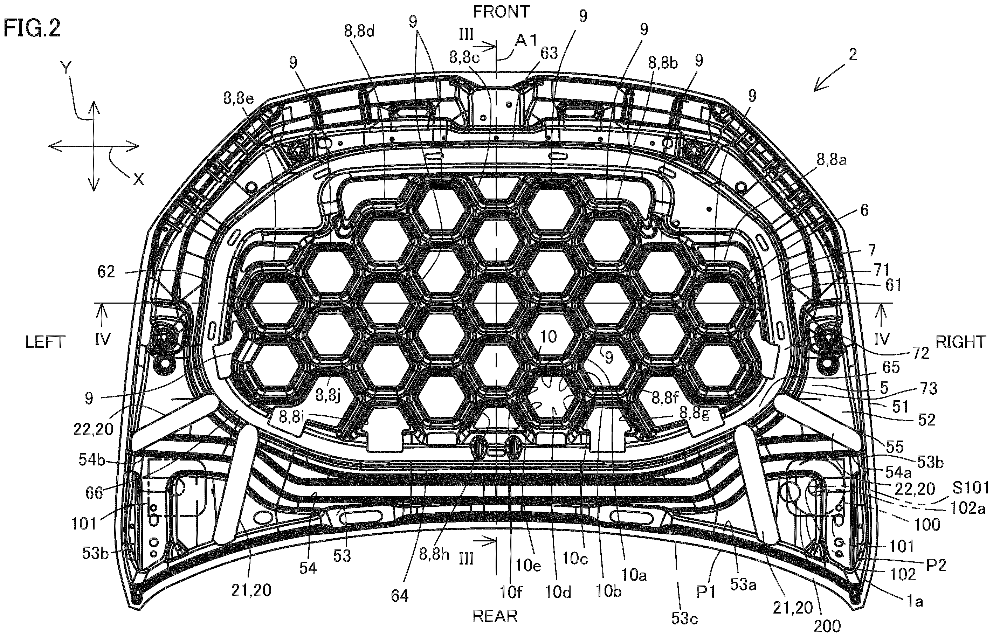

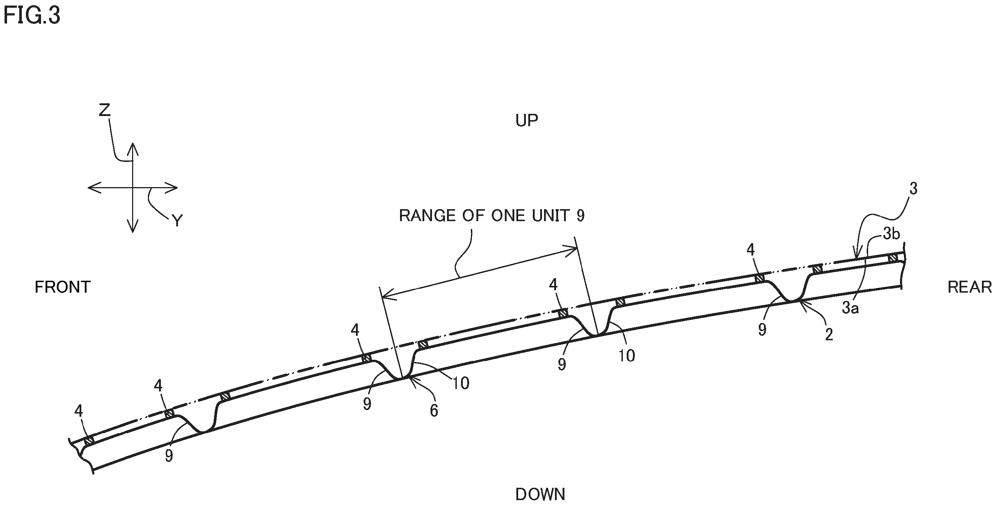

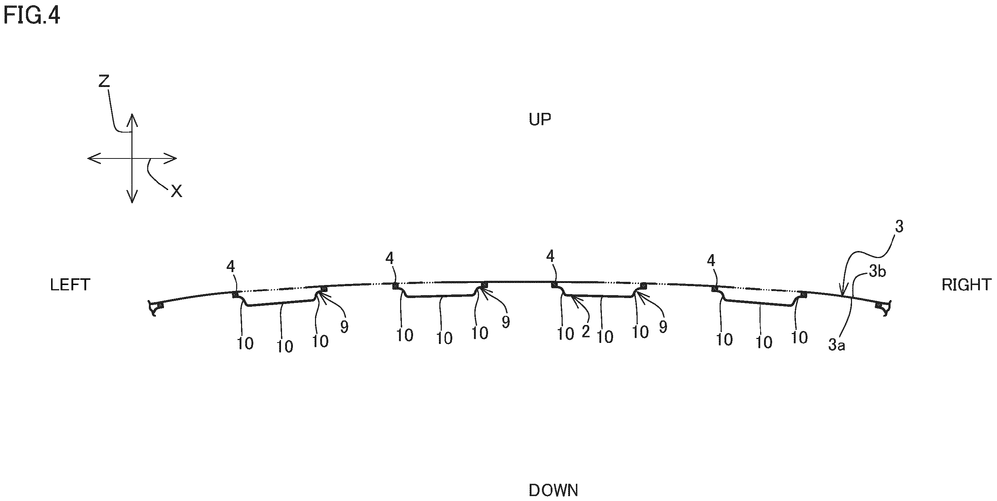

Figure 1 is a schematic exploded perspective view of an automobile hood 1 according to one embodiment of the present invention. Figure 2 is a plan view of an inner panel 2 of the automobile hood 1. Figure 3 is a schematic cross-sectional view along a line III-III in Figure 2. Figure 4 is a cross-sectional view along a line IV-IV in Figure 2. In Figure 3 and Figure 4, illustration of a portion that appears to the rear of the cross section is omitted. Further, in Figure 3 and Figure 4, an outer panel 3 that does not appear in Figure 2 is indicated by a chain double-dashed line that is a virtual line.

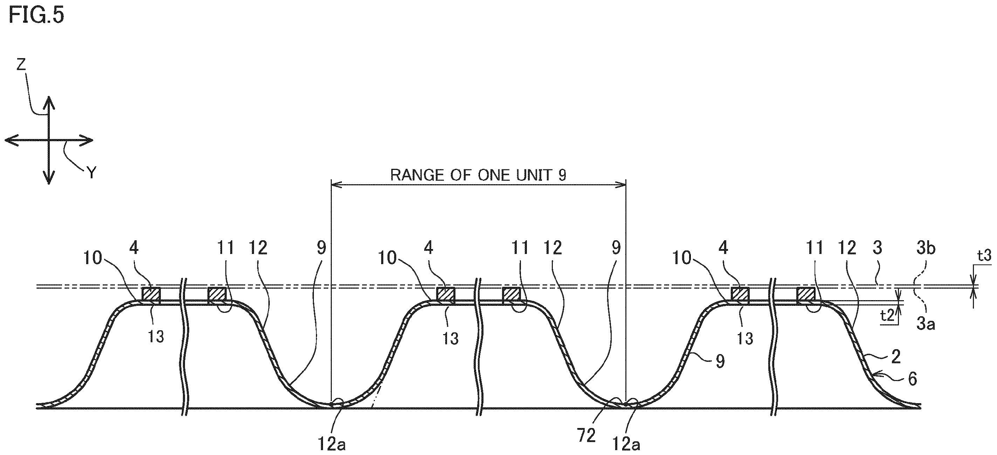

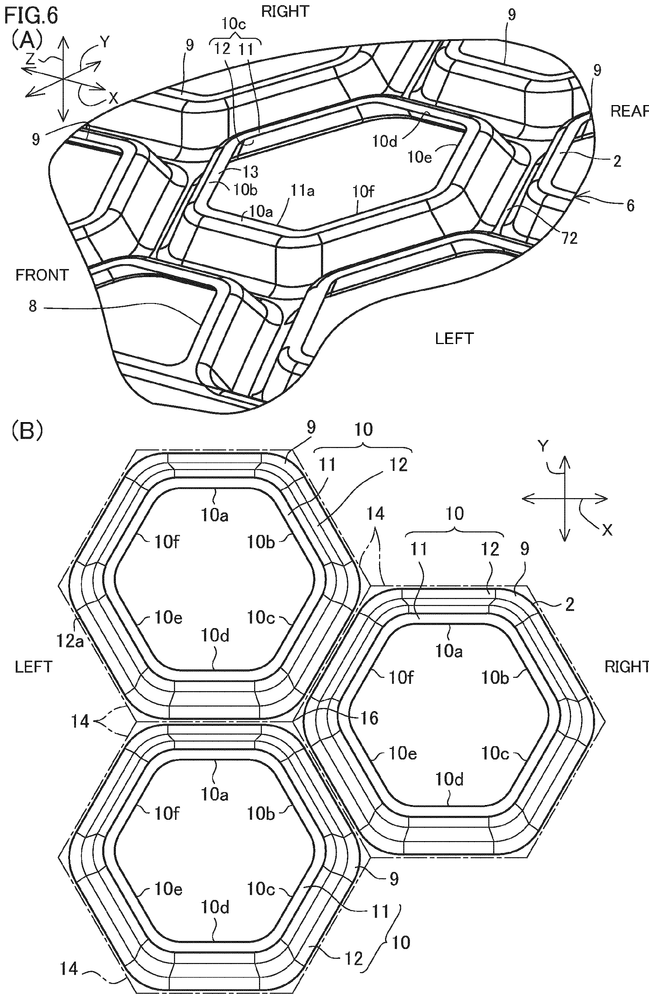

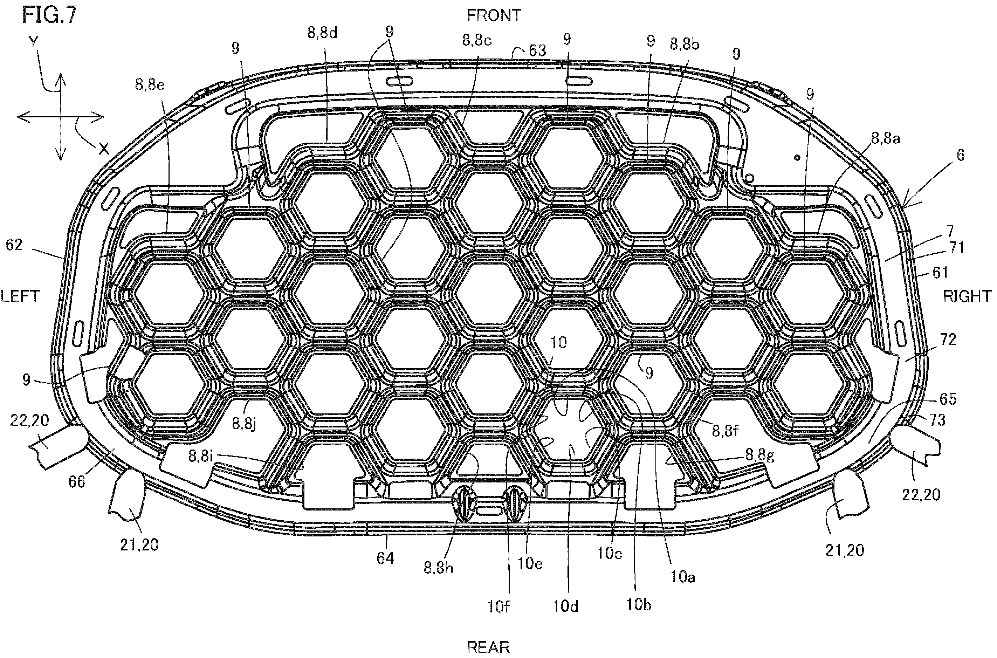

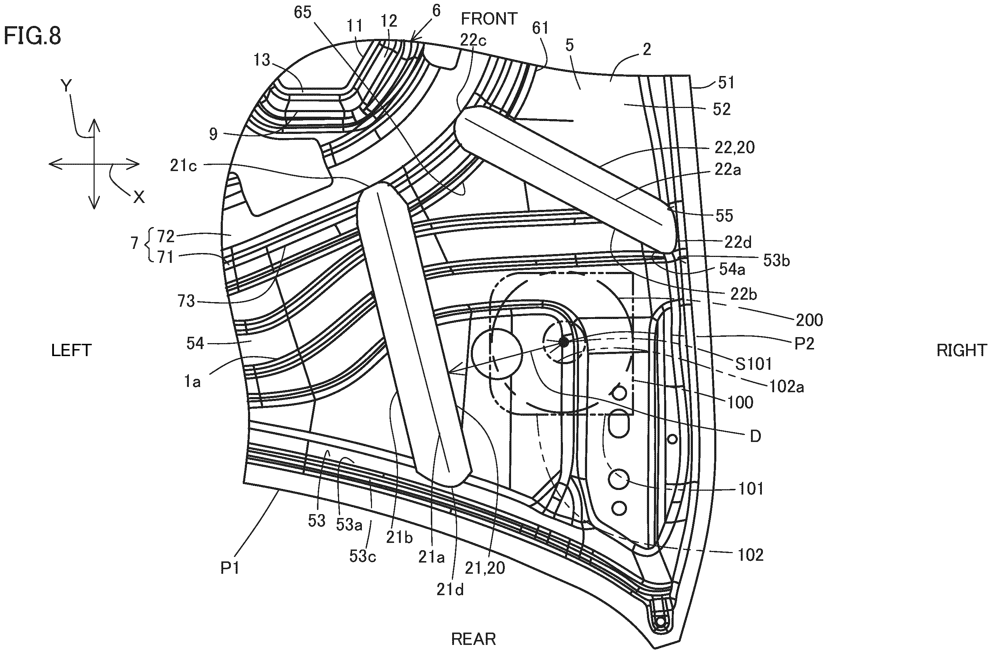

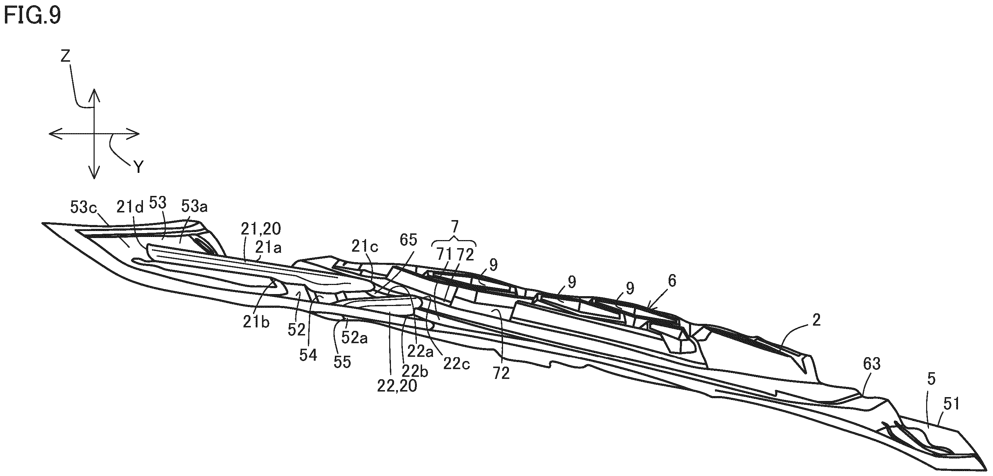

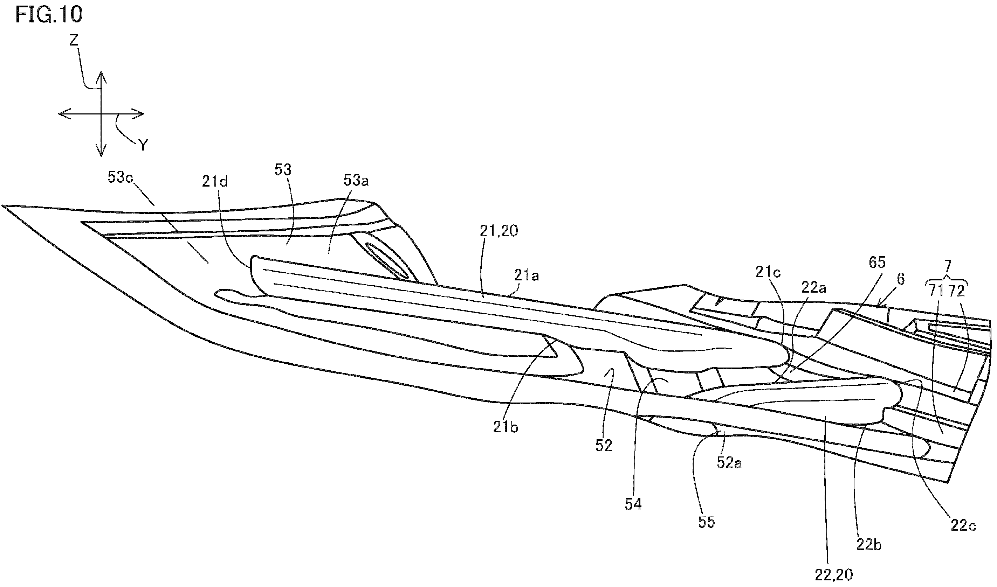

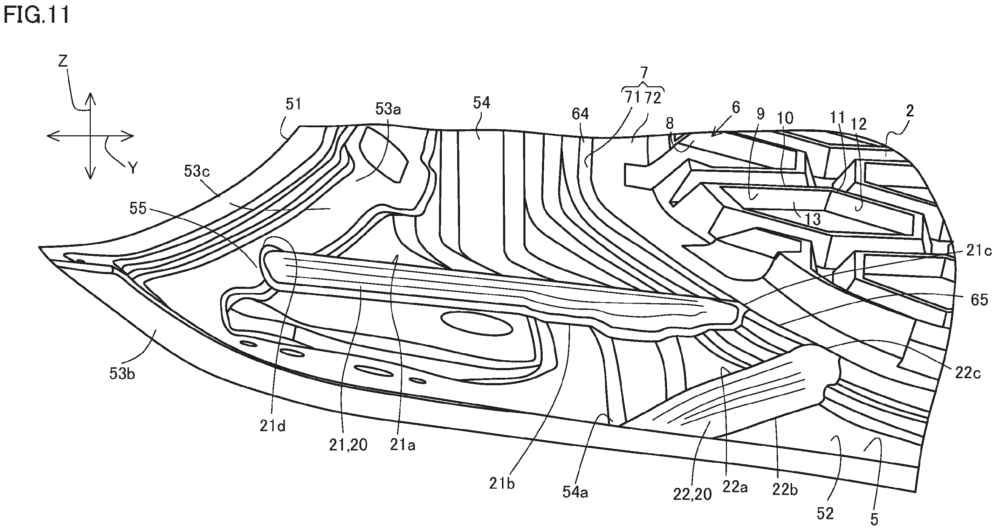

Figure 5 is a view in which one part of Figure 3 is enlarged. Figure 6(A) is a perspective view in which a periphery of one unit 9 of the inner panel 2 is enlarged. Figure 6(B) is a view for describing respective unit boundaries 14 of a plurality of the units 9. Figure 7 is a plan view illustrating an overhanging structure 6 extracted from the inner panel 2. Figure 8 is a view in which a right rear part of the inner panel 2 is enlarged. Figure 9 is a right-side view of the inner panel 2, in which illustration of one part of an upper portion of the overhanging structure 6 is omitted. Figure 10 is a view in which an area around the right rear part of the inner panel 2 illustrated in Figure 9 is enlarged. Figure 11 is a perspective view of an area around a rear part on a right side of the inner panel 2. Hereinafter, unless otherwise specified, the embodiment will be described with reference to Figure 1 to Figure 11 as appropriate.

The automobile hood 1 is a front hood that is provided at a front part of an automobile, and is also referred to as a "bonnet". An automobile in which the automobile hood 1 is provided is, for example, a passenger vehicle. A sedan-type passenger vehicle, a coupe-type passenger vehicle, a hatchback-type passenger vehicle, a minivan-type passenger vehicle, an SUV (sport utility vehicle)-type passenger vehicle and the like can be mentioned as examples of the passenger vehicle.

In the present description, the terms "front", "rear", "left", "right", "upper", and "lower" are used taking a time when the automobile hood 1 is installed in an automobile and the automobile hood 1 is closed as the basis. The term "front" refers to the direction in which the automobile advances. The term "rear" refers to the direction in which the automobile reverses. The term "right" refers to the turning direction of the automobile when the automobile which is advancing turns to the right. The term "left" refers to the turning direction of the automobile when the automobile which is advancing turns to the left. In the present embodiment, the vehicle cross direction of the automobile in which the automobile hood 1 is installed is referred to as a "cross direction X". A vehicle length direction of the automobile in which the automobile hood 1 is installed is referred to as a "longitudinal direction Y". A vehicle height direction of the automobile in which the automobile hood 1 is installed is referred to as a "height direction Z".

The automobile hood 1 has the automobile inner panel 2, the automobile outer panel 3 that is supported by the automobile inner panel 2, and joints 4 which join the automobile outer panel 3 and the inner panel 2.

Hereinafter, the automobile inner panel 2 is referred to as the "inner panel 2" and the automobile outer panel 3 is referred to as the "outer panel 3".

In the automobile hood 1, the outer panel 3 is a portion that constitutes a part of the outer surface of the automobile. The outer panel 3 is formed of, for example, a metal material such as a mild steel sheet or a high-tensile strength steel sheet. Examples of the high-tensile strength steel sheet that can be mentioned include steel sheets having a tensile strength of 340 MPa or more, for example, a steel sheet having a tensile strength of 590 MPa or more. The outer panel 3 is formed, for example, by subjecting a single steel sheet to press working or the like. A sheet thickness t3 of the outer panel 3 (thickness of the steel sheet) is preferably 0.6 mm or less, more preferably is 0.5 mm or less, and further preferably is 0.4 mm or less. A lower limit of the sheet thickness t3 of the outer panel 3 is, for example, 0.2 mm. The thinner the sheet thickness t3 of the outer panel 3 is, the lighter the automobile hood 1 can be made.

The outer panel 3 may be an aluminum alloy sheet. In a case where the outer panel 3 is an aluminum alloy sheet, the sheet thickness t3 of the outer panel 3 is preferably 0.4 to 1.2 mm, and more preferably is 0.8 to 1.0 mm.

There are no particular restrictions with regard to a shape of the outer panel 3. In the present embodiment, the outer panel 3 has a shape in which a central portion is upwardly convex in the height direction Z.

The inner panel 2 is joined to an undersurface 3a of the outer panel 3, and reinforces the outer panel 3. By this means, the inner panel 2 increases tensile rigidity of the outer panel 3. In addition, in the present embodiment, the inner panel 2 increases dent resistance of the outer panel 3. That is, in the present embodiment, the tensile rigidity and the dent resistance of the outer panel 3 are not secured by making the sheet thickness of the outer panel 3 a large thickness, but rather are secured by the shape of the inner panel 2.

Tensile rigidity corresponds to a feeling of elastic resistance or a sensation of deflection deformation when the outer panel 3 is pressed with a hand. This characteristic is usually represented by the deflection when a load is applied. The smaller the deflection is when a constant load is applied, the higher the tensile rigidity is. Surface rigidity refers to difficulty for deformation of the outer panel to occur in a certain area range when the outer panel 3 receives a load such as a vertical load from the outer surface of the outer panel 3. Dent resistance is an index of difficulty of producing permanent strain which remains after the relevant part is strongly pressed (an index representing difficulty of forming a dent flaw). For example, when the outer panel is pressed down strongly, a dent flaw will easily be formed if the dent resistance is low.

The inner panel 2 is formed, for example, of a metal material such as a steel sheet. The inner panel 2 is formed, for example, by subjecting a single steel sheet to press working. The inner panel 2 may be an integrally formed product, or may be formed by joining a plurality of members together. In the present embodiment, the inner panel 2 is an integrally formed product. A sheet thickness t2 of the inner panel 2 (thickness of the steel sheet) is preferably 0.3 mm to 0.6 mm, and more preferably is 0.4 mm to 0.5 mm. The sheet thickness t2 of the inner panel 2 may be less than the sheet thickness t3 of the outer panel 3, may be the same as the sheet thickness t3 of the outer panel 3, or may be greater than the sheet thickness t3 of the outer panel 3.

The inner panel 2 may be an aluminum alloy sheet. In a case where the inner panel 2 is an aluminum alloy sheet, the sheet thickness t2 of the inner panel 2 is preferably 0.4 mm to 1.2 mm, and more preferably is 0.6 to 1.0 mm.

The inner panel 2 has an outer circumferential portion 5, the overhanging structure 6 arranged so as to be surrounded by the outer circumferential portion 5, and a bead 20 formed at the outer circumferential portion 5.

The outer circumferential portion 5 is an outer circumferential part of the inner panel 2. When the outer panel 3 is closed, the outer circumferential portion 5 of the inner panel 2 is received by the automobile body (not illustrated) together with the outer circumferential portion of the outer panel 3. By this means, a load that acts on an upper face 3b of the outer panel 3 is received by the automobile body through the inner panel 2.

The outer circumferential portion 5 has an outer circumferential edge 51, a panel bottom portion 52 that is surrounded by the outer circumferential edge 51, and a rising portion 53 that is arranged at a rear part of the panel bottom portion 52.

The outer circumferential edge 51 is a place that is joined by hemming to the outer panel 3. The panel bottom portion 52 and the rising portion 53 are arranged so as to descend downward from the outer circumferential edge 51.

The panel bottom portion 52 is a bottom portion of the inner panel 2. The panel bottom portion 52 is formed in a three-dimensional shape having undulations. Because the panel bottom portion 52 has an undulating shape, bending rigidity of the outer circumferential portion 5 of the inner panel 2 is increased. The panel bottom portion 52 includes a portion that rises and falls in the height direction Z. The specific shape of the panel bottom portion 52 is not particularly limited.

As illustrated clearly in Figure 2, Figure 8, and Figure 11, a main rib 54 which is elongated in the cross direction X is formed to the rear of the overhanging structure 6 in the panel bottom portion 52. The main rib 54 extends so as to connect a right side part and a left side part of the outer circumferential edge 51. In the present embodiment, the main rib 54 has a downwardly convex shape. As viewed in a sheet thickness direction of the inner panel 2, the main rib 54 extends leftward from a right end part 54a which faces the rear part of the overhanging structure 6 in the cross direction X at the right side part of the outer circumferential edge 51, then moves rearward so as to bypass the outer circumferential portion 5 of the overhanging structure 6, thereafter moves leftward in a straight line along the cross direction X, then moves frontward so as to be adjacent to the outer circumferential portion 5 of the overhanging structure 6, and thereafter is connected to the left side part of the outer circumferential edge 51 at a left end part 54b. In the present description, unless otherwise specified, the phrase "viewed in the sheet thickness direction" refers to a view from the sheet thickness direction of the inner panel 2 (the outer panel 3).

The rising portion 53 is arranged on the rear side of the panel bottom portion 52 (rearward of the main rib 54). In the rising portion 53, a first portion 53a that is located at the rear of the panel bottom portion 52 is a sloping wall that extends upward progressively toward the rear. Second portions 53b, 53b of the rising portion 53 that are located on the right side and left side of the panel bottom portion 52 are sloping walls that extend upward progressively as they move away from the center of the inner panel 2 in the cross direction X.

The overhanging structure 6 has a three-dimensional structure which is provided in order to receive a load acting on the upper face 3b of the outer panel 3. The overhanging structure 6 has a configuration in which members that have a hat-shaped cross section (a V-shaped cross section or a U-shaped cross section) are combined. In the present embodiment, the overhanging structure 6 has a shape that is symmetrical in the cross direction X.

As illustrated clearly in Figure 2 and Figure 7, a right end 61 of the overhanging structure 6 is arranged in the vicinity of a right side portion of the outer circumferential edge 51 of the inner panel 2. A left end 62 of the overhanging structure 6 is arranged in the vicinity of a left side portion of the outer circumferential edge 51 of the inner panel 2. A front end 63 of the overhanging structure 6 is arranged in the vicinity of a front side portion of the outer circumferential edge 51 of the inner panel 2. A rear end 64 of the overhanging structure 6 is arranged in the vicinity of a rear end portion of the outer circumferential edge 51 of the inner panel 2.

In the present embodiment, the overhanging structure 6 is a substantially oval shape that is elongated in the cross direction X as viewed in the sheet thickness direction. A right rear part 65 of the overhanging structure 6 is formed in a curved shape which is convex toward the right rear side as viewed in the sheet thickness direction. Similarly, a left rear part 66 of the overhanging structure 6 is formed in a curved shape which is convex toward the left rear side as viewed in the sheet thickness direction.

The overhanging structure 6 has a pedestal 7, and an incomplete unit 8 and a plurality of units 9 that are provided on the pedestal 7.

The pedestal 7 is arranged on the inner side of the inner panel 2 relative to the outer circumferential portion 5 of the inner panel 2.

The pedestal 7 has a pedestal vertical wall 71 that rises upward from the panel bottom portion 52 of the inner panel 2, and a top plate 72 that is continuous with the upper end of the pedestal vertical wall 71. An outer circumferential portion 73 of the pedestal 7 is formed by an outer circumferential part of the top plate 72 and the pedestal vertical wall 71.

The pedestal vertical wall 71 is the outer circumferential edge of the overhanging structure 6 as viewed in the sheet thickness direction. The pedestal vertical wall 71 is formed in an annular shape. A length of the pedestal vertical wall 71 in the height direction Z is approximately several mm to several cm.

The top plate 72 is a plate-shaped portion formed in a shape that follows the shape of the outer panel 3. Specifically, the clearance between the top plate 72 and the outer panel 3 at each part of the top plate 72 is made substantially constant. The top plate 72 supports the incomplete units 8 and the units 9.

Each unit 9 is formed in a polygonal (in the present embodiment, hexagonal) annular shape as viewed in the sheet thickness direction. By forming each unit 9 in a small polygonal shape that is annular, the inner panel 2 can be made lightweight and the inner panel 2 can also be provided with high rigidity.

In the present embodiment, each unit 9 is formed in the shape of a substantially regular hexagon. The corners of the regular hexagon are rounded. The term "regular hexagon" means a hexagon in which the lengths of the respective sides are equal and the interior angles are also a constant angle of 120 degrees. Further, in the present description, the term "substantially regular hexagon" refers to a hexagon that can be treated as a regular hexagon from the viewpoint of the tensile rigidity and the viewpoint of the dent resistance of the outer panel 3. The respective units 9 are formed so that each unit 9 has substantially the same shape. In this case, the phrase "substantially the same" indicates that the structures are the same except in the respect that the shape of each unit 9 is made to match a shape which matches the curved shape of the outer panel 3.

Each unit 9 may also be formed in the shape of a hexagon other than a regular hexagon. Examples of a hexagon other than a regular hexagon that can be mentioned include a hexagon in which the lengths of the respective sides are not uniform, and a hexagon in which the interior angles are not made uniform at 120 degrees. Examples of a hexagon in which the lengths of the respective sides are not uniform that can be mentioned include a hexagon in which a front end side and a rear end side have a predetermined first length, and in which the other four sides have a predetermined second length that is different from the first length.

The overhanging structure 6 has a structure in which a plurality of the units 9 having a hexagonal annular shape are disposed in a close-packed arrangement. In this case, the term "close-packed" means that a plurality of the units 9 that are adj acent to each other are arranged without a gap therebetween. Specifically, each unit 9 is partitioned off from the other units 9 by a unit boundary 14 that is described hereunder. As illustrated in Figure 6(B), a front end 12a (lower end) of an inclined wall 12 forms a boundary of the unit 9 that includes the front end 12a, to thereby form the unit boundary 14. The unit boundary 14 is formed in a hexagonal shape in plan view. By employing such kind of polygonal units 9, the surface rigidity, described later, at a place where the units 9 of the automobile hood 1 are disposed can be further increased. In addition, by a plurality of the units 9 being disposed in a close-packed arrangement as described above, the overhanging structure 6 can withstand loads in substantially the same manner from all directions including the height direction Z over the whole area thereof as viewed in the sheet thickness direction. By this means, the surface rigidity of the automobile hood 1 can be further increased even though the inner panel 2 and the outer panel 3 are made thin and lightweight.

Referring to Figure 2, Figure 5, Figure 6(A), and Figure 6(B), in a case where the units 9 are disposed in a close-packed arrangement, preferably a plurality of the units 9 are the same shape. The units 9 that have similar forms to each other and have differing shapes may also be disposed in a close-packed arrangement. In the overhanging structure 6, the units 9 do not have to be disposed in a close-packed arrangement, and another portion may be formed between the units 9 and 9 that are adjacent to each other.

In the present embodiment, the plurality of units 9 are formed symmetrically in the cross direction X as a whole. For example, in the present embodiment, three of the units 9 are arranged side by side in a front-to-rear direction at the center in the cross direction X. Further, in plan view, the plurality of units 9 are arranged symmetrically in the cross direction X with reference to a virtual line A1 extending in the front-to-rear direction through the center of the aforementioned three of the units 9 in the cross direction X. Note that, the arrangement of the units 9 is not limited to this configuration, and the tensile rigidity and the dent resistance of the outer panel 3 do not depend on the orientation of the units 9 with respect to the cross direction X or the longitudinal direction Y in plan view. Therefore, there is no restriction on the directions of the units 9.

In the present embodiment, in a direction toward the right side from the aforementioned three units 9 arranged at the central position in the cross direction X are provided, in the following order, four units 9 which are arranged side by side in the longitudinal direction Y, further three units 9 which are arranged side by side in the longitudinal direction Y, further two units 9 which are arranged side by side in the longitudinal direction Y, and further two units 9 which are arranged side by side in the longitudinal direction Y. Furthermore, similarly to the aforementioned arrangement, in a direction toward the left side from the aforementioned three units 9 arranged at the central position in the cross direction X are provided, in the following order, four units 9 which are arranged side by side in the longitudinal direction Y, further three units 9 which are arranged side by side in the longitudinal direction Y, further two units 9 which are arranged side by side in the longitudinal direction Y, and further two units 9 which are arranged side by side in the longitudinal direction Y.

Each unit 9 has six sub-units 10 (10a to 10f). In the present embodiment, in each of the units 9, a front sub-unit 10a and a rear sub-unit 10d extend along the cross direction X, respectively. In each of the units 9, the remaining four sub-units 10 extend in a direction that inclines with respect to the longitudinal direction Y in plan view. In this way, the unit 9 that has a polygonal shape is formed by the plurality of sub-units 10.

Each sub-unit 10 (10a to 10f) has the inclined wall 12 that rises from the top plate 72 of the pedestal 7, and a flange 11 that is continuous with the upper end of the inclined wall 12.

The flange 11 is adjacent to the outer panel 3, and in the sub-unit 10, the flange 11 is a portion that is arranged closest to the outer panel 3. The flange 11 is a strip-shaped portion. In a single unit 9, the flanges 11 of the six sub-units 10a to 10f as a whole form an annular flange 13 whose external shape is hexagonal as viewed in the sheet thickness direction. Note that, the external shape of the annular flange 13 may be a polygonal shape other than a hexagon, may be a substantially circular shape, or may be a substantially oval shape. Each corner of the external shape of the annular flange 13 is made a rounded shape, to thereby reduce the concentration of stress. In the present embodiment, the inner edge of the annular flange 13 is formed in a hexagonal shape. The inner edge of the annular flange 13 may be a polygonal shape other than a hexagon, may be a circular shape, or may be an oval shape. In the flange 11, a width at a location where the joint 4 is provided is preferably 2 mm or more. By this means, a sufficient amount of the joint 4 can be provided.

In the present embodiment, in each unit 9, the flange 11 of at least some of the sub-units 10 is provided with the joint 4. The inner panel 2 is joined to the outer panel 3 through these joints 4. That is, the outer panel 3 is arranged on the upper side of the inner panel 2 and is joined to the annular flanges 13. The inclined wall 12 extends downward from the flange 11.

The inclined wall 12 connects the flange 11 and the top plate 72. The inclined wall 12 is provided over the entire area in a longitudinal direction L of the sub-unit 10 in which the relevant inclined wall 12 is provided. The inclined wall 12 is formed, for example, in an inclined shape that advances toward the central axis side of the unit 9 as it approaches the outer panel 3 side.

The flange 11 is continuous with the upper end of the inclined wall 12. The top plate 72 is continuous with the lower end of the inclined wall 12. The flange 11 and the inclined wall 12 are continuous with each other in a smoothly curving shape, making it difficult for stress concentration to occur. Similarly, the inclined wall 12 and the top plate 72 are continuous with each other in a smoothly curving shape, making it difficult for stress concentration to occur.

A lower end 12a of the inclined wall 12 is a portion that is farthest from the outer panel 3 in the unit 9. The front end of the lower end 12a of the inclined wall 12 is integral with the front end of a lower end portion 12 of the inclined wall 12 in another unit 9 that is adjacent thereto, and is integral with the top plate 72. In one unit 9, the front ends of the lower ends 12a of the six inclined walls 12 in the six sub-units 10a to 10f form the hexagonal unit boundary 14 as a whole.

In the present embodiment, a height of the unit 9 in the height direction Z is the distance between the top plate 72 and the upper face of the flange 11 in the height direction Z. The height of the unit 9 is preferably 10 mm or more. In a case where this height is 10 mm or more, when a bending force acts that attempts to bend the inner panel 2, that is, when a bending force that deflects a part or all of the inner panel 2 in a bow shape acts, a moment of inertia with respect to the bending force can be made higher. By this means, bending deformation of the inner panel 2 and the outer panel 3 which is joined to the inner panel 2 can be suppressed. The aforementioned height of the unit 9 is preferably 13 mm or more.

In the present embodiment, the joint 4 is an adhesive. A mastic sealer (mastic adhesive) can be exemplified as the adhesive. A resin-based adhesive can be exemplified as the mastic sealer. The adhesive may have a property of being cured at normal temperature (for example, 20 degrees Celsius), or may have a property of being cured by undergoing a heating process or a drying process.

In each unit 9, the joint 4 is provided on at least one of the plurality of flanges 11 of the inner panel 2. The joint 4 joins the flange 11 on which the joint 4 is provided and the undersurface 3a of the outer panel 3.

The incomplete unit 8 has a configuration equivalent to a configuration in which one portion of the unit 9 is missing along the circumferential direction of the polygonal (in the present embodiment, hexagonal) unit 9. The incomplete unit 8 has a side portion that is similar to the sub-unit 10 of the unit 9.

In the present embodiment, the incomplete unit 8 is provided at five locations (incomplete units 8a to 8e) at the front part of the overhanging structure 6, and is also provided at five locations (incomplete units 8f to 8j) at the rear part of the overhanging structure 6.

The incomplete unit 8a is arranged in front of a unit 9 at the right end, and is formed in an annular shape that includes two of the sub-units 10. The incomplete unit 8b is arranged in front of the third unit 9 from the right, and is formed in an annular shape that includes two of the sub-units 10. The incomplete unit 8c is arranged in front of a unit 9 that is at the center in the cross direction X, and is formed in an annular shape that includes four of the sub-units 10. The incomplete unit 8d is arranged in front of the third unit 9 from the left, and is formed in an annular shape that includes two of the sub-units 10. The incomplete unit 8e is arranged in front of a unit 9 at the left end, and is formed in an annular shape that includes two of the sub-units 10.

The incomplete unit 8f is arranged at the rear of the second unit 9 from the right. The incomplete unit 8f includes five of the sub-units 10, and is formed in a shape with ends that includes one part of a hexagon. The incomplete unit 8g is arranged at the rear of the third unit 9 from the right. The incomplete unit 8g includes three of the sub-units 10, and is formed in a shape with ends that includes one part of a hexagon. The incomplete unit 8h is arranged at the rear of a unit 9 that is at the center in the cross direction X. The incomplete unit 8h includes four of the sub-units 10, and is formed in a trapezoidal annular shape. The incomplete unit 8i is arranged at the rear of the third unit 9 from the left. The incomplete unit 8i includes three of the sub-units 10, and is formed in a shape with ends that includes one part of a hexagon. The incomplete unit 8j is arranged at the rear of the second unit 9 from the left. The incomplete unit 8j includes five of the sub-units 10, and is formed in a shape with ends that includes one part of a hexagon.

The bead 20 is arranged on the rear side of the overhanging structure 6 that has the structure described above.

The bead 20 is provided in order to secure rigidity with respect to an impact load that acts on a rear portion 1a of the automobile hood 1 from above (rigidity as the surface of the automobile hood 1; hereinafter, also referred to as "surface rigidity of the hood rear portion 1a"). For example, when a vehicle on which the automobile hood 1 is installed collides head-on with a pedestrian, if the surface rigidity of the hood rear portion 1a is high, the amount of the impact from the pedestrian, in particular, the head of the pedestrian, that is absorbed by the automobile hood 1 can be made large. Hence, the impact that the pedestrian receives from components in the engine compartment can be reduced and hence the pedestrian protection performance can be increased. That is, the bead 20 is provided in order to lower a head injury criterion (HIC) value.

As illustrated clearly in Figure 2 and Figure 8 to Figure 11, a plurality of the beads 20 are provided in the inner panel 2. The beads 20 are arranged on the rear portion 1a side of the automobile hood 1 in the vehicle length direction (longitudinal direction Y). The term "rear portion 1a" refers to, for example, a portion that is rearward from the center of the automobile hood 1 in the longitudinal direction Y. The term "rear portion 1a" may refer to a portion that is the rearward one-third of the automobile hood 1 in the longitudinal direction Y. The beads 20 are arranged on the rear portion 1a side as a place where the overhanging structure 6 is not arranged and where there is a wide area in the inner panel 2. In the present embodiment, a first bead 21 and a second bead 22 are provided as the plurality of beads 20.

The beads 21 and 22 are arranged on each of the right side and the left side of the inner panel 2, with the first bead 21 and the second bead 22 taken as one set. By arranging at least two beads 21 and 22 as one set in this way, a more uniform surface rigidity can be secured at the rear portion 1a of the automobile hood 1. The beads 21 and 22 on the right side of the inner panel 2 and the beads 21 and 22 on the left side of the inner panel 2 are arranged symmetrically in the cross direction X. Each of the beads 21 and 22 is arranged on the rear side of the overhanging structure 6. In the present embodiment, each of the beads 21 and 22 is arranged at a position which is close to the outer circumferential edge 51 of the inner panel 2 in the cross direction X, and which is separated from the center position of the inner panel 2 in the cross direction X. In the present embodiment, mainly the two beads 21 and 22 on the right side will be described. The description of the two beads 21 and 22 on the right side will also be used to substitute for a description of the two beads 21 and 22 on the left side.

The second bead 22 is arranged near an outer end part of the inner panel 2 in the cross direction X. The first bead 21 is arranged on the inner side in the cross direction X relative to the second bead 22. Each of the beads 21 and 22 has a structure that connects the outer circumferential portion 73 of the pedestal 7 and an outer end portion 55 of the inner panel 2 in a direction (horizontal direction) perpendicular to the sheet thickness direction (height direction Z) of the inner panel 2. In this case, the term "outer end portion 55 of the inner panel 2" refers to a location at which the outer circumferential portion 5 of the inner panel 2 (for example, the rising portion 53) and the bead 20 are connected when the bead 20 extends in the longitudinal direction of the bead 20 at the place where the bead 20 is arranged. In the present embodiment, the term "outer end portion 55 of the inner panel 2" does not refer to the outer circumferential edge 51 (edge) of the inner panel 2 as viewed in the sheet thickness direction. However, the term "outer end portion 55" may refer to the outer circumferential edge 51.

In the present embodiment, the beads 20 (21, 22) are arranged in a linear shape as viewed in the sheet thickness direction. By this means, the rigidity as the surface of the inner panel 2 can be increased.

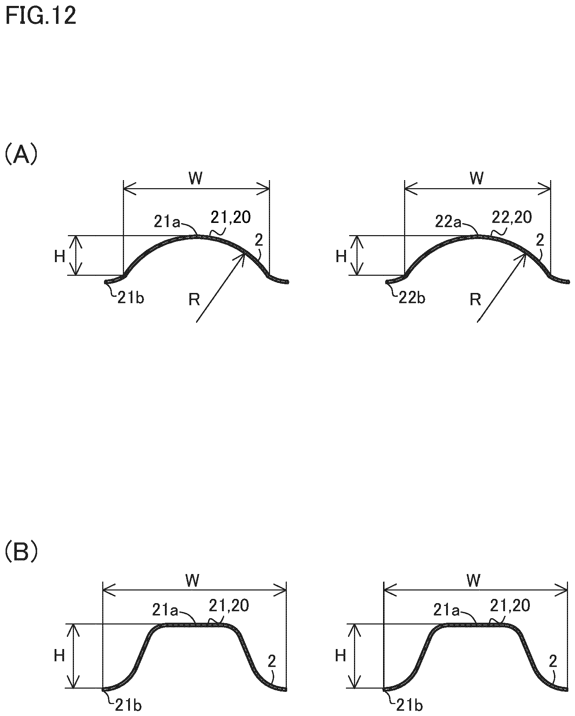

Figure 12(A) is a multiview drawing schematically illustrating a cross section perpendicular to the longitudinal direction of the first bead 21 in the first bead 21, and a cross section perpendicular to the longitudinal direction of the second bead 22 in the second bead 22. In Figure 12(A), illustration of the rear side of each cross section is omitted. Hereunder, the cross section perpendicular to the longitudinal direction in each of the beads 21 and 22 is referred to as simply a "cross section".

Referring to Figure 12(A), in the present embodiment, each of the beads 21 and 22 is formed by subjecting a starting material to press forming in the upward direction. It is preferable to make each of the beads 21 and 22 convex toward the outer panel 3 side in this way. In this case, the beads 21 and 22 will be located on the inner side of bending of the inner panel 2 caused by a compressive load generated on the inner panel 2 by the collision of a pedestrian with the automobile hood 1. Thus, a degree to which the beads 21 and 22 contribute to the surface rigidity of the inner panel 2 can be made larger. Each of the beads 21 and 22 may also be formed by subjecting the starting material of the inner panel 2 to press forming in the downward direction.

In the present embodiment, the cross-sectional shape of each of the beads 21 and 22 is a circular arc shape. From the viewpoint of suppressing the occurrence of stress concentration, it is preferable that the cross-sectional shape of each of the beads 21 and 22 is a smooth curve. The cross-sectional shape of each of the beads 21 and 22 may be an elliptical arc shape obtained by causing the circular arc shape illustrated in Figure 12(A) to protrude more in the upward direction, or may be a polygonal shape as illustrated in Figure 12(B) (in Figure 12(B), the polygonal shape is a hat shape). Figure 12(B) is a view illustrating a modification of the cross-sectional shape of the respective beads 20 (21,22).

In a case where the cross-sectional shape of each of the beads 21 and 22 is a circular arc shape, preferably the curvature radius R of the circular arc is made to fall within the range of 10 mm to 40 mm. A height H (maximum height) of each of the beads 21 and 22 is preferably 10 mm to 40 mm. Further, a width W (maximum width) of each of the beads 21 and 22 is preferably 10 mm to 40 mm. In a case where at least one of the curvature radius R, the height H, and the width W of each of the beads 21 and 22 satisfies the aforementioned range, stress concentration in the inner panel 2 caused by each of the beads 21 and 22 can be suppressed. Further, in such a case, the effect of improving the surface rigidity of the inner panel 2 that is produced by each of the beads 21 and 22 can be exerted to a greater degree. An upper limit of each of the curvature radius R, the height H, and the width W of each of the beads 21 and 22 may be more than 40 mm, and is set according to the size of the automobile hood 1.

Referring to Figure 8 to Figure 11, upper ends 21a and 22a of the respective beads 21 and 22 extend linearly substantially parallel to the top plate 72. Lower ends 21b and 22b of the respective beads 21 and 22 are continuous with the panel bottom portion 52 and the rising portion 53 of the outer circumferential portion 5 of the inner panel 2, and the pedestal vertical wall 71. A height position of each of the lower ends 21b and 22b of the respective beads 21 and 22 changes as it advances in the longitudinal direction of the respective beads 21 and 22.

In the present embodiment, the first bead 21 extends diagonally rearward and outward from the overhanging structure 6. With regard to the longitudinal direction of the first bead 21, a longitudinal direction Y component is larger than a cross direction X component, and it can be said that the first bead 21 mainly faces in the longitudinal direction Y. One end 21c (front end) of the first bead 21 is connected to the outer circumferential portion 73 of the pedestal 7. In the present embodiment, the one end 21c is connected to, in the overhanging structure 6, the right rear part 65 that is curved as viewed in the sheet thickness direction. The one end 21c of the first bead 21 is opened to the space on the inner side of the pedestal vertical wall 71. The other end 21d (rear end) of the first bead 21 is connected to the outer end portion 55 of the inner panel 2. In the present embodiment, the other end 21d is arranged at the rising portion 53 of the outer circumferential portion 5. The other end 21d of the first bead 21 is opened to a rear surface 53c side of the rising portion 53.

In the present embodiment, the second bead 22 extends diagonally rearward and outward from the overhanging structure 6. With regard to the longitudinal direction of the second bead 22, a cross direction X component is larger than a longitudinal direction Y component, and it can be said that the second bead 22 mainly faces in the cross direction X. One end 22c (front end) of the second bead 22 is connected to the outer circumferential portion 73 of the pedestal 7. In the present embodiment, the one end 22c is connected to, in the overhanging structure 6, the right rear part 65 that is curved as viewed in the sheet thickness direction. The one end 22c is adjacent to the first bead 21 at a distance that is less than the width of one of the units 9. It suffices to appropriately set the distance between the one ends 21c and 22c of the respective beads 21 and 22 according to a target value for the rigidity of the inner panel 2 to be achieved by the beads 21 and 22. The one end 22c of the second bead 22 is opened to the space on the inner side of the pedestal vertical wall 71. The other end 22d (rear end) of the second bead 22 is arranged in the right rear part of the panel bottom portion 52 at a position which is advanced inward in the cross direction X by approximately several tens of mm from the outer circumferential edge 51. The other end 22d of the second bead 22 is connected to the outer end portion 55 (the second portion 53b of the rising portion 53) of the inner panel 2, and is opened to the outside of the inner panel 2 in the cross direction X.

In the present embodiment, an intermediate portion of each of the beads 21 and 22 is arranged so as to straddle the main rib 54 (see Figure 11). By adopting this configuration, the rigidity of the inner panel 2 can be further increased by cooperation between the respective beads 21 and 22 and the main rib 54. At least one of the beads 21 and 22 need not be arranged to intersect with the main rib 54.

Preferably the distance between the upper ends 21a and 22a of the respective beads 21 and 22 and the outer panel 3 in the height direction Z is greater than the height H of the beads 21 and 22. By adopting such a configuration, at the outer circumferential portion 5 of the inner panel 2, a larger distance can be secured between the inner panel 2 and the outer panel 3. By securing a larger distance between the inner panel 2 and the outer panel 3, the torsional rigidity of the automobile hood 1 can be further increased. The distance between the inner panel 2 and the panel bottom portion 52 of the outer circumferential portion 5 of the inner panel 2 is preferably 40 mm or more, and more preferably is 50 mm or more. In addition, by arranging the beads 21 and 22 at a place where a larger distance has been secured between the inner panel 2 and the outer panel 3, the surface rigidity of the inner panel 2 is also secured.

In the present embodiment, when the automobile hood 1 has been installed in a vehicle, a plurality of the beads 21 and 22 are arranged so that a suspension tower 101 of the vehicle is disposed between the plurality of beads 21 and 22 as viewed in the sheet thickness direction of the inner panel 2.

As illustrated clearly in Figure 2 and Figure 8, each suspension tower 101 is one part of an automobile body 100 of the vehicle. The suspension tower 101 is formed of a steel sheet or an aluminum alloy sheet or the like. The suspension tower 101 is formed, for example, in the shape of a hollow column. An upper end portion 102 of the suspension tower 101 is formed in a rectangular shape or a circular shape or the like, and the upper end portion of a shock absorber (not illustrated) is attached thereto. A through-hole 102a that is formed approximately coaxially with the upper end portion of the shock absorber is provided in the upper end portion 102. In the present embodiment, the center of the through-hole 102a is a suspension tower center S101. The suspension tower center S101 may be at a position other than the center of the through-hole 102a. The shock absorber is connected to the suspension tower 101 and to a hub (not illustrated) connected to a tire of a front wheel or the like.

The beads 21 and 22 are arranged so as to sandwich the suspension tower 101 as viewed in the sheet thickness direction. In the present embodiment, the suspension tower 101 is arranged below the panel bottom portion 52. In the present embodiment, the beads 21 and 22 are arranged so as not to overlap with the upper end portion 102 of the suspension tower 101 as viewed in the sheet thickness direction. At least one of the beads 21 and 22 may be arranged so as to overlap with the upper end portion 102 of the suspension tower 101 as viewed in the sheet thickness direction.

A suitable location for arranging the first bead 21 will now be considered with reference to Figure 1, Figure 2, and Figure 8. Specifically, a conventional example in which, at the locations where the beads 21 and 22 are arranged, a flat inner panel shape is adopted instead of the beads 21 and 22 will be considered. In this case, when the aforementioned impact load acts on the suspension tower 101 at the rear portion 1a of the automobile hood 1, in the inner panel 2, for example, the impact load causes bending to occur in a downwardly concave manner at a bending position P1 which is rearward of the unit 9 arranged furthest on the outer side in the cross direction X in the overhanging structure 6 and which is in the vicinity of the outer circumferential edge 51 of the inner panel 2. When such kind of bending occurs, the surface rigidity of the automobile hood 1 decreases and the absorbed amount of the impact load is reduced. As a result, the inner panel 2 comes into contact with the suspension tower 101 due to the impact load. Such contact makes it easier for a reaction force from the suspension tower 101 to be transmitted to the pedestrian via the inner panel 2. Hence, this results in deterioration in performance with respect to the HIC. Using this finding, the inventors of the present application conceived of the idea of devising a preferable arrangement range of the first bead 21 with respect to the suspension tower center S101.

Specifically, first, the automobile hood 1 is produced as a test hood. Next, the suspension tower 101 (predetermined vehicle component) is arranged at a predetermined distance (for example, 50 mm) below the test hood (automobile hood 1). Under this condition, an impact load from a head impactor 200 is applied over the rear portion 1a of the outer panel of the test hood (automobile hood 1). The head impactor 200 is an object that imitates a human head. The head impactor 200 is, for example, a spherical object with a diameter of about 165 mm. A point of application P2 of the impact load is set at, for example, a position that is directly above the suspension tower 101 in the test hood (automobile hood 1). As a more specific example, the point of application P2 is, for example, with a C-segment vehicle in mind, set at a position where a distance WAD (wrap around distance) from the ground at the front end of the vehicle along the vehicle surface is 1600 mm, and the distance from the center in the width direction of the test hood (automobile hood 1) is 600 mm. The collision condition for the head impactor 200 is set as a speed of 40 km/h from diagonally in front (at an angle of 65 degrees from the horizontal direction) of the test hood (automobile hood 1). The value of impact (HIC) acting on the head impactor 200 under this collision condition is determined. Since the method for calculating the HIC is known, a description thereof will be omitted here. It is assumed that a condition with respect to the automobile hood 1 is that the outer circumferential portion 5 of the inner panel 2 is supported by the automobile body. A state when the automobile hood 1 is actually installed on the vehicle is taken as the basis for the other conditions.

The test hood of the automobile hood 1, the suspension tower 101, the head impactor 200 and the like may be actually produced, or may be created as a model using a computer.

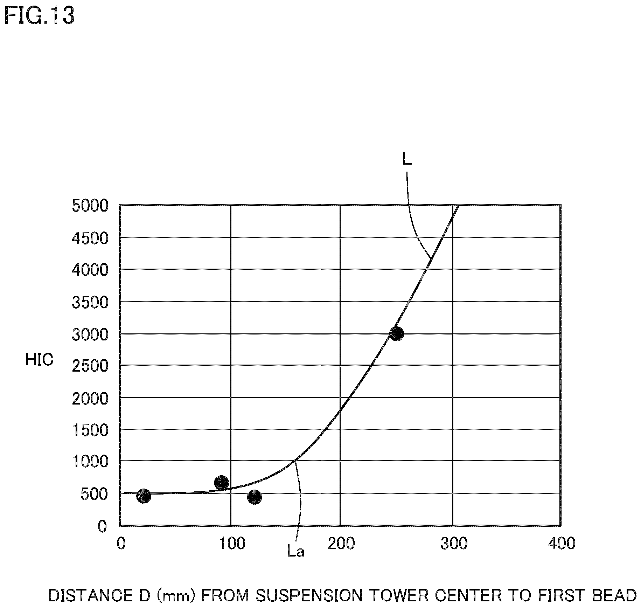

The aforementioned calculation of the HIC is performed multiple times while fixing the positions of the point of application P2 and the second bead 22 and changing a distance D from the suspension tower center S 101 to the first bead 21 in the cross direction X. By this means, as illustrated in Figure 13, a relation between the distance D from the suspension tower center S101 to the first bead 21 and the HIC (value of impact) is determined. Figure 13 is a graph illustrating one example of the relation between the distance D from the suspension tower center S101 to the first bead 21 and the HIC (value of impact). The distance D is the shortest distance between the suspension tower center S101 and the first bead 21 as viewed in the sheet thickness direction. In this graph, an example is illustrated in which the HIC was calculated four times while changing the distance D, and a trend line L was calculated based on the results. In the graph, the HIC rapidly increases from a point where the distance D is about 150 mm. Making the distance D a value which is less than or equal to the value of the distance D in the vicinity of a change point La where such kind of rapid change occurs is effective for reducing the HIC. In the present embodiment, the first bead 21 is formed at a position that is set based on the trend line L.

In the present embodiment, the distance D from the suspension tower center S101 to the first bead 21 is preferably 200 mm or less, and more preferably is 150 mm or less. It is even more preferable for the distance D to be less than the distance D (130 mm) at the position where bending occurs in the inner panel 2 at the time of the aforementioned HIC calculation when the beads 21 and 22 are omitted.

As described above, according to the present embodiment, the inner panel 2 and the outer panel 3 are joined at a plurality of the flanges 11 (annular flanges 13) of the overhanging structure 6, and furthermore the beads 21 and 22 connect the outer circumferential portion 73 of the pedestal 7 and the outer end portion 55 of the inner panel 2. According to this configuration, the bending rigidity of the inner panel 2 at the rear portion 1a of the automobile hood 1 is increased by the beads 21 and 22. By this means, in a case where, for example, the head of a pedestrian collides with the rear portion 1a of the automobile hood 1, the automobile hood 1 can support the pedestrian with high rigidity. Hence, it is possible to suppress the occurrence of a collision between the pedestrian and a member under the automobile hood 1, or to alleviate an impact caused by contact with the aforementioned member under the automobile hood 1. Thus, the pedestrian protection properties when a pedestrian collides with the rear portion 1a of the automobile hood 1 can be further improved.

According to the present embodiment, the suspension tower 101 is arranged between the plurality of beads 21 and 22 as viewed in the sheet thickness direction. According to this configuration, in the automobile hood 1, the bending rigidity in and around the area above the location where the suspension tower 101 is arranged can be increased. As a result, when a pedestrian collides with the rear portion 1a of the automobile hood 1, the automobile hood 1 can receive the pedestrian with a high degree of rigidity and thereby lessen the impact received by the pedestrian, and thus the impact which the pedestrian receives from the suspension tower 101 can be made smaller.

In the present embodiment, the inner panel 2 is constituted by a steel sheet having the sheet thickness t2 of 0.3 mm to 0.6 mm. When the thickness of the inner panel 2 is 0.6 mm or less, the inner panel 2 can be made lightweight. On the other hand, in this case there is a tendency for the bending rigidity of the inner panel 2 to decrease. However, by providing the beads 21 and 22, the surface rigidity of the automobile hood 1 at the rear portion 1a of the automobile hood 1 can be increased to a degree required for practical use.

As described above, according to the present embodiment, the inner panel 2 and the outer panel 3 are each formed of a thin sheet material to make the automobile hood 1 lightweight. In addition, by providing the overhanging structure 6 including the plurality of hexagonal units 9 at the center of the automobile hood 1, sufficient surface rigidity is secured. Further, pairs of left and right beads 21 and 22 are provided as sets at the wide and thin rear portion 1a which is at the rear of the overhanging structure 6 in the automobile hood 1. By this means, in the automobile hood 1, sufficient surface rigidity can be secured even at a place where it is difficult to secure surface rigidity due to being thin and wide which is to the rear of the overhanging structure 6. Thus, the automobile hood 1 can be realized which has high surface rigidity (pedestrian protection properties) as a whole including the rear portion 1a, while also being lightweight.

An embodiment of the present invention is described above. However, the present invention is not limited to the above embodiment and modifications. In the present invention, various changes are possible within the scope of the accompanying claims. Hereunder, configurations that are different from the above embodiment are mainly described, and like components are denoted by like reference symbols in the drawings as in the above embodiment and a detailed description thereof is omitted.

### <Modification of arrangement of beads>

In the embodiment described above, a configuration in which the beads 21 and 22 are arranged on both the right side and the left side of the automobile hood 1 is described as an example. However, this need not be the case. The number of the beads 20 and the longitudinal direction of the beads as viewed in the sheet thickness direction are not limited to the configuration described above. In modifications of the beads 20 described hereunder, one part of the inner panel 2 is illustrated diagrammatically. The following modifications are described on the premise that the plurality of beads are arranged symmetrically in the cross direction X.

### <First modification of arrangement of beads (vertical stripes arrangement)>

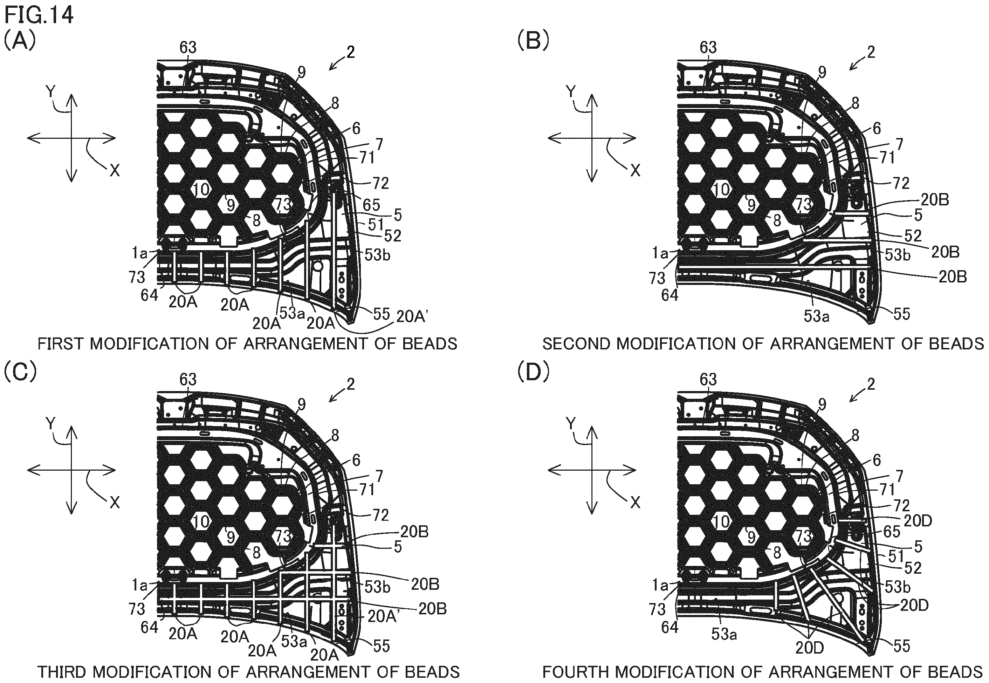

Figure 14(A) is a schematic plan view of a principal part of the inner panel 2. Figure 14(A) illustrates a first modification of the arrangement of the beads. In the first modification, a plurality of beads 20A are provided parallel to the longitudinal direction Y and are spaced apart from each other in the cross direction X. Each of the beads 20A is formed as a bead that connects the outer circumferential portion 73 of the pedestal 7 and the outer end portion 55 of the inner panel 2. Except for the fact that the beads 20A are parallel to the longitudinal direction Y, the beads 20A have the same configuration as the first bead 21 described above. Preferably, the plurality of beads 20A are arranged at an equal pitch in the cross direction X. The plurality of beads 20A may be arranged at unequal pitches in the cross direction X. The plurality of beads 20A are arranged over substantially the entire area in the cross direction X at the rear portion 1a of the automobile hood 1. The front end of an outermost bead 20A' in the cross direction X is not connected to the outer circumferential portion 73 of the pedestal 7, and is located at a middle portion of the panel bottom portion 52. However, this kind of bead 20A' also contributes to improving the bending rigidity of the inner panel 2.

### <Second modification of arrangement of beads (horizontal stripes arrangement)>

Figure 14(B) illustrates a second modification of the arrangement of the beads. In the second modification, a plurality of beads 20B are provided parallel to the cross direction X and are spaced apart from each other in the longitudinal direction Y. The two beads 20B at the front side are formed as beads that connect the outer circumferential portion 73 of the pedestal 7 and the outer end portion 55 of the inner panel 2. The rearmost bead 20B connects the outer end portions 55 of the inner panel 2 to each other. Except for the fact that the beads 20B are parallel to the cross direction X, the beads 20B have the same configuration as the first bead 21 described above. Preferably, the beads 20B are arranged at an equal pitch in the longitudinal direction Y. The plurality of beads 20B may be arranged at unequal pitches in the longitudinal direction Y.

### <Third modification of arrangement of beads (lattice arrangement)>

Figure 14(C) illustrates a third modification of the arrangement of the beads. In the third modification, beads 20A that are parallel to the longitudinal direction Y, and beads 20B that are parallel to the cross direction X are provided in a lattice shape. The configuration of the beads 20A is the same as the configuration of the beads 20A illustrated in Figure 14(A). The configuration of the beads 20B is the same as the configuration of the beads 20B illustrated in Figure 14(B).

### <Fourth modification of arrangement of beads (radial arrangement)>

Figure 14(D) illustrates a fourth modification of the arrangement of the beads. In the fourth modification, a plurality of beads 20D are arranged in a radial shape from the overhanging structure 6 as viewed in the sheet thickness direction. The plurality of beads 20D are provided at intervals in the circumferential direction of the overhanging structure 6. Each of the beads 20D is formed as a bead that connects the outer circumferential portion 73 of the pedestal 7 and the outer end portion 55 of the inner panel 2. Except for the longitudinal directions of beads 20D as viewed in the sheet thickness direction, the beads 20D have the same configuration as the first bead 21 described above. Preferably, the beads 20D are arranged at an equal pitch in the circumferential direction of the overhanging structure 6. The beads 20D may be arranged at unequal pitches in the circumferential direction of the overhanging structure 6. Preferably, the plurality of beads 20D are arranged on the outer side in the cross direction X at the rear portion 1a of the automobile hood 1. The beads 20D are arranged radially around a position which, for example, is further on the outer side than the center of the overhanging structure 6 in the cross direction X as viewed in the sheet thickness direction. By arranging the beads 20D radially in this manner, the effect of increasing the surface rigidity of the automobile hood 1 can be made greater because the beads 20D are arranged over a wider area at the rear part of the automobile hood 1.

### <Fifth modification of arrangement of beads (front outer side stripes arrangement)>

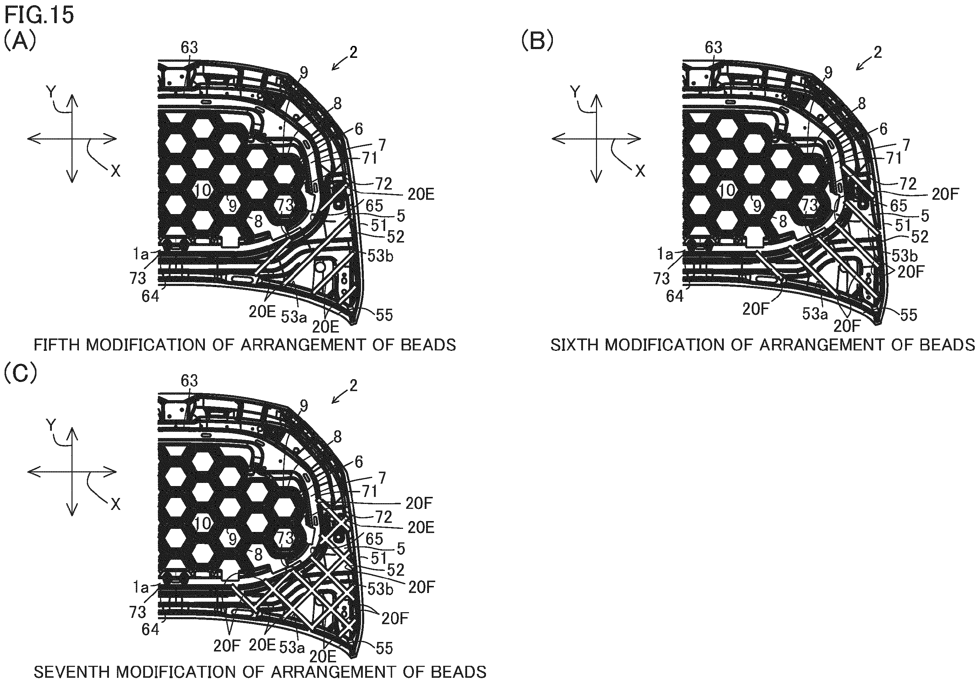

Figure 15(A) illustrates a fifth modification of the arrangement of the beads. In the fifth modification, a plurality of beads 20E extend diagonally frontward and outward as viewed in the sheet thickness direction. The plurality of beads 20E are provided at intervals in a direction perpendicular to the longitudinal direction of the beads 20E. Some of the beads 20E are formed as beads that connect the outer circumferential portion 73 of the pedestal 7 and the outer end portion 55 of the inner panel 2. The remaining beads 20E connect together the outer end portions 55 of the inner panel 2. Except for the fact that the beads 20E extend diagonally frontward and outward, the beads 20E have the same configuration as the first bead 21 described above. Preferably the beads 20E are arranged at an equal pitch in the direction perpendicular to the longitudinal direction of the beads 20E as viewed in the sheet thickness direction. The beads 20E may be arranged at unequal pitches in the direction perpendicular to the longitudinal direction of the beads 20E. Preferably the plurality of beads 20E are arranged over substantially the entire area in the cross direction X at the rear portion 1a of the automobile hood 1. A configuration may be adopted in which the plurality of beads 20E are arranged only on the outer end portion side in the cross direction X at the rear portion 1a.

### <Sixth modification of arrangement of beads (front inner side stripes arrangement)>

Figure 15(B) illustrates a sixth modification of the arrangement of the beads. In the sixth modification, a plurality of beads 20F extend diagonally frontward and inward as viewed in the sheet thickness direction. The plurality of beads 20F are provided at intervals in a direction perpendicular to the longitudinal direction of the beads 20F. Each of the beads 20F is formed as a bead that connects the outer circumferential portion 73 of the pedestal 7 and the outer end portion 55 of the inner panel 2. Except for the fact that the beads 20F extend diagonally frontward and inward, the beads 20F have the same configuration as the first bead 21 described above. Preferably the beads 20F are arranged at an equal pitch in the direction perpendicular to the longitudinal direction of the beads 20F as viewed in the sheet thickness direction. The beads 20F may be arranged at unequal pitches in the direction perpendicular to the longitudinal direction of the beads 20F. Preferably the plurality of beads 20F are arranged over substantially the entire area in the cross direction X at the rear portion 1a of the automobile hood 1. A configuration may be adopted in which the plurality of beads 20F are arranged only on the outer end portion side in the cross direction X at the rear portion 1a.

### <Seventh modification of bead arrangement (diagonal lattice arrangement)>

Figure 15(C) illustrates a seventh modification of the arrangement of the beads. In the seventh modification, beads 20E that extend diagonally frontward and outward, and bead 20F that extend diagonally frontward and inward are provided in a lattice shape. The configuration of the beads 20E is the same as the configuration of the beads 20E illustrated in Figure 15(A). The configuration of the beads 20F is the same as the configuration of the beads 20F illustrated in Figure 15(B).

### <Modification of unit (flange of unit is circular flange)>

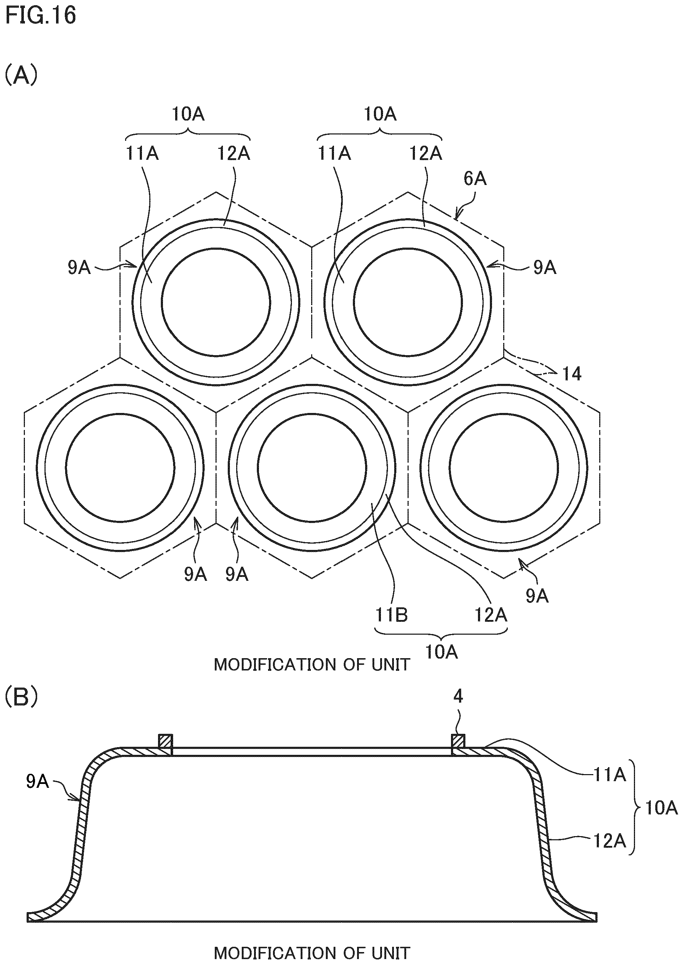

In the embodiment and modifications described above, a configuration in which the unit 9 included in the overhanging structure 6 is a polygonal shape is described as an example. However, the shape of the unit is not limited to a polygonal shape. For example, as illustrated in Figure 16(A) and Figure 16(B), the unit may be a unit 9A that is formed in a circular shape by a single sub-unit 10A. Figure 16 is a multiview drawing illustrating a modification of the unit. Figure 16(A) is a schematic plan view of a principal part. Figure 16(B) is a cross-sectional view of one unit 9A illustrated in Figure 16(A). An overhanging structure 6A has a configuration in which the units 9A are disposed in a close-packed arrangement.

In each unit 9A, an inclined wall 12A is formed in a cylindrical shape or a hollow truncated cone shape, and a flange 11A is formed in a circular shape. The inclined wall 12A and the flange 11A may be formed in an oval shape (a type of circular shape) in plan view. In the overhanging structure 6A, the units 9A do not have to be disposed in a close-packed arrangement, and another portion may be formed between the units 9A and 9A that are adjacent.

Each unit 9A has one sub-unit 10A. Further, the sub-unit 10A has the flange 11A, and the inclined wall 12A that is continuous with the flange 11A.

### <Other modifications>

In the embodiment and modifications described above, forms in which the inner panel 2 and the outer panel 3 are formed of a steel sheet or an aluminum alloy sheet have been described as examples. However, this does not have to be the case. At least one of the inner panel 2 and the outer panel 3 may be formed of a resin material such as glass fiber or carbon fiber. Further, at least one of the inner panel 2 and the outer panel 3 may be formed of a composite material of a metal material and a resin material or the like.

### INDUSTRIAL APPLICABILITY

The present invention can be widely applied as an inner panel of an automobile hood, an automobile hood, and a method for producing an automobile hood.

### REFERENCE SIGNS LIST

1 automobile hood
1a rear part of inner panel
2 inner panel
3 outer panel
5 outer circumferential portion of inner panel
7 pedestal
9, 9A unit
11, 11A flange
12, 12A inclined wall
20, 20A, 20B, 20D, 20E, 20F bead
55 outer end portion of inner panel
73 outer circumferential portion of pedestal
101 suspension tower (vehicle component)
200 head impactor (object)
D distance (distance of bead from vehicle component)
H height of bead
Y longitudinal direction (vehicle length direction)
t2 sheet thickness

## Claims

1. An inner panel of an automobile hood, comprising:
a pedestal that is arranged on an inner side of the inner panel relative to an outer circumferential portion of the inner panel,
a plurality of units that each include an inclined wall rising from the pedestal, and a flange that is continuous with an upper end of the inclined wall, and
at least one bead among a bead that connects together outer end portions of the inner panel in a direction perpendicular to a sheet thickness direction of the inner panel, and a bead that connects an outer circumferential portion of the pedestal and the outer end portion,
wherein:
a plurality of the beads are provided, and are arranged on a rear side of the inner panel in a vehicle length direction of a vehicle in which the automobile hood is installed.

2. The inner panel of an automobile hood according to claim 1, wherein:
each of the beads has a height of 10 mm to 40 mm and a width of 10 mm to 40 mm.

3. The inner panel of an automobile hood according to claim 1, wherein:
the flange of each of the units is a polygonal shape or a circular shape as viewed in the sheet thickness direction of the inner panel.

4. The inner panel of an automobile hood according to claim 3, wherein:
a plurality of the units are disposed in a close-packed arrangement.

5. The inner panel of an automobile hood according to claim 1, wherein:
when the automobile hood is installed in the vehicle, a plurality of the beads are arranged so that a suspension tower of the vehicle is arranged between a plurality the beads as viewed in the sheet thickness direction of the inner panel.

6. The inner panel of an automobile hood according to claim 1, wherein:
the inner panel is composed of a steel sheet having a sheet thickness of 0.3 mm to 0.6 mm.

7. An automobile hood, comprising:
the inner panel according to any one of claim 1 to claim 6, and
an outer panel that is arranged on an upper side of the inner panel and is joined to the flange.

8. A method for producing an automobile hood according to claim 7, comprising:
producing the automobile hood as a test hood, and under a condition in which a predetermined vehicle component is arranged at a predetermined distance below the test hood, determining a value of impact acting on an object when an impact load is applied from the object onto a rear part of the test hood, and
forming the bead at a position that is set based on a relation between a distance of the bead from the vehicle component as viewed in the sheet thickness direction of the inner panel and the value of impact.
